# EUROPÄISCHE PATENTSCHRIFT

(11) **EP 1 312 633 B1**
(45) Veröffentlichungstag und Bekanntmachung des Hinweises auf die Patenterteilung: **26.07.2006**
(21) Anmeldenummer: 02022512.4
(22) Anmeldetag: 07.10.2002
(51) Int. Cl.: C08G 69/26, B32B 27/34, C08L 77/06

(54) **Verfahren zum Herstellen einer Polyamidformmasse**
Process for the production of polyamide compositions for moulding
Procédé de fabrication de compositions de polyamide pour moulage

(30) Priorität: 15.11.2001 CH 20952001
(43) Veröffentlichungstag der Anmeldung: 21.05.2003
(73) Patentinhaber: EMS Chemie AG, 7013 Domat/Ems (CH)
(72) Erfinder: Presenz, Ulrich, Dr., 7014 Trin (CH); Schmid, Stephan, 7013 Domat / Ems (CH); Luck, Hans Rudolf, Dr., 7013 Domat / Ems (CH)
(74) Vertreter: Heusch, Christian

(56) Entgegenhaltungen:
- EP-A- 0 288 972
- EP-A- 0 409 666
- PATENT ABSTRACTS OF JAPAN vol. 1998, no. 01, 30. Januar 1998 (1998-01-30) & JP 09 228142 A (MITSUBISHI GAS CHEM CO INC), 2. September 1997 (1997-09-02)
- PATENT ABSTRACTS OF JAPAN vol. 013, no. 065 (M-797), 14. Februar 1989 (1989-02-14) & JP 63 267549 A (MITSUBISHI GAS CHEM CO INC;OTHERS: 01), 4. November 1988 (1988-11-04)

## Beschreibung

Die Erfindung betrifft ein Verfahren zum Herstellen einer Polyamidformmasse, gemäss dem Oberbegriff des unabhängigen Anspruchs 1, das folgende Verfahrensschritte umfasst: Zugabe und Lösen von m-Xylylendiamin und Dicarbonsäuren, welche Adipinsäure und aromatische Dicarbonsäuren umfassen, mit Wasser und Additiven in einem Löser und Herstellen einer Mischung; Überführen der Mischung in ein Reaktionsgefäss und Polykondensieren der Mischung in diesem Reaktionsgefäss; Granulieren des Polykondensats und Trocknen des Granulats. Typischerweise umfasst das Herstellen einer Polyamidformmasse diese Schritte, wobei die Rezeptur und die jeweilige Verfahrensparameter dieser Schritte sich gegenseitig beeinflussen. Ein zusätzlicher, wesentlicher Schritt betrifft das Kristallisieren des Granulats. Die übliche hydrolytische Herstellung von Polyamiden bzw. Copolyamiden im Batchverfahren wird z.B. im "Nylon Plastics Handbook" (1955, Herausgeber M.I. Kohan) auf Seite 17 und folgenden beschrieben und ist bekannt. Speziell ausgeführt ist dort auch die Batchproduktion von PA66 (vgl. dort Seite 19-22).

Polyamide, welche sich zum Beispiel als Barriereschichten bzw. diffusionshemmende Schichten für Gase wie Sauerstoff oder Kohlendioxid in aus Polyethylenterephthalat (PET) hergestellten Flaschen eignen, sind bekannt. So beschreibt z.B. US 4,398,642 einen orientierten Mehrschichtbehälter aus mindestens zwei Kunststoffen (Polyester und MXDA-haltiges Polyamid). US 4,535,901 offenbart eine Mehrschichtflasche mit drei oder mehr Schichten aus mindestens zwei Kunststoffen (Polyester und Polyamid, EVOH, Polyolefin, Polyacryl, PVC, PC oder PS), wobei der Flaschenhals nur einschichtig ausgebildet ist. US 4,728,549 offenbart eine 5-Schicht-Flasche aus Polyester und einem MXDA-haltigen Polyamid, wobei der Flaschenhals ebenfalls einschichtig ausgebildet ist. Die Flaschenwand ist verstreckt und umfasst definierte Schichtdicken und Zusammensetzungen. Beim Spritzgiessen von Formlingen für in die Form geblasene PET-Flaschen hat es sich jedoch herausgestellt, dass Polyamide - insbesondere solche mit m-Xylylendiamin - schlechte Fliesseigenschaften zum Herstellen der Barriereschichten in diesen Formlingen aufweisen und zu der Bildung einer unregelmässigen Schmelzfront, einer sogenannten "Fingerbildung", neigen (vgl. z.B. EP 0 288 972). Dadurch ergibt sich eine unvollständige Diffusionsbarriere in der fertigen PET-Flasche, was nicht toleriert werden kann. Das durch eine Polykondensationsreaktion aus Adipinsäure und m-Xylylendiamin erhaltene Homopolyamid MXD6 (vgl. EP 0 288 972) wird nach dem in EP 0 071 000 und EP 0 084 661 beschriebenen Verfahren hergestellt. Aus EP 0 409 666 sind Verfahren zur Bereitstellung von m-Xylylendiamin enthaltenden Polyamid-Zusammensetzungen bekannt, welche verbesserte Gasbarriereneigenschaften aufweisen. Stellt man besonders hohe Anforderungen an eine Sauerstoffbarriere, so wird das Ziel gewöhnlich durch den in EP 0 301 719 beschriebenen Einsatz von Sauerstoff-Scavengern erreicht. Der Sauerstoff-Scavenger reduziert allerdings die Schmelzeviskosität des Polyamids während der Verarbeitung. Die Kohlendioxidbarriere wird durch Sauerstoff-Scavenger nicht beeinflusst, wodurch die Haltbarkeit von Getränken mit Kohlendioxid trotz Einsatz eines Sauerstoff-Scavengers stark beschränkt bzw. ungenügend sein kann.

Die Aufgabe der vorliegenden Erfindung besteht darin, ein alternatives Verfahren und eine Zusammensetzung vorzuschlagen, welche die Verwendung von m-Xylylendiamin umfassen und sich zur Herstellung einer in der Qualität verbesserten Polyamidformmasse zur Produktion von gegenüber dem Homopolyamid verbesserten diffusionshemmenden Schicht für Kohlendioxid in Verpackungen, insbesondere in aus Polyethylenterephthalat (PET) hergestellten Flaschen, eignen.

Diese Aufgabe wird mit dem Verfahren und der Zusammensetzung gelöst, welche durch die Merkmale des unabhängigen Anspruchs 1 definiert werden. Dieses Verfahren zum Herstellen einer Polyamidformmasse umfasst folgende Verfahrensschritte:
a) Die Zugabe und das Lösen von m-Xylylendiamin und Dicarbonsäuren, welche Adipinsäure und aromatische Dicarbonsäuren umfassen, mit Wasser und Additiven in einem Löser und das Herstellen einer Mischung, wobei die Summe der zugegebenen aromatischen Dicarbonsäuren 2 Mol% bis 15 Mol% (bezogen auf die Zugabe an Dicarbonsäuren) beträgt;
b) Das Überführen der Mischung in ein Reaktionsgefäss und das Polykondensieren der Mischung in diesem Reaktionsgefäss;
c) Das Granulieren des Polykondensats; und
d) Das Trocknen des Granulats.

Das erfindungsgemässe Verfahren ist dadurch gekennzeichnet, dass:
- die Polykondensation bei einem Druck von maximal 10 bar und einer Temperatur von 255°C bis 270°C ausgeführt wird, wobei der Druck unter Aufheizen des Reaktionsgefässes auf 255°C bis 270°C aufgebaut und - unmittelbar nachdem die Mischung die Maximaltemperatur erreicht hat - unter Einhalten einer Temperatur von 255°C bis 270°C auf atmosphärische Bedingungen reduziert und die Polykondensation bei dieser Temperatur und einem Druck von weniger als 800 mbar weitergeführt wird; und dass
- das Granulat vor dem Trocknen einer Unterwasserkristallisation unterzogen wird.

In diesem erfindungsgemässen Verfahren wird vorzugsweise Natriumhypophosphit als Polykondensationskatalysator und Hitzestabilisator verwendet. Das erfindungsgemäss hergestellte Granulat wird bevorzugt einer Festphasennachkondensation in einem Inertgasstrom oder in einem Vakuum unterworfen, wobei das Granulat unter Bewegung über ein Temperaturprofil auf zumindest annähernd die Nachkondensationstemperatur vorgewärmt und anschliessend bei 160°C bis 200°C nachkondensiert wird. Speziell bevorzugt wird dabei als Inertgas Stickstoff verwendet. Vorzugsweise wird zudem die Festphasennachkondensation im Vakuum bei einem Druck von weniger als 800 mbar ausgeführt. Zudem wird bevorzugt, dass dem Granulat nach der Festphasennachkondensation ein Sauerstoff-Scavenger in Form einer organischen Metallverbindung (z.B. Carbonsäuresalze von Eisen, Cobalt, Nickel) zugemischt wird. Weitere erfindungsgemässe Merkmale ergeben sich aus den abhängigen Ansprüchen.

Vorteile der mit dem erfindungsgemässen Verfahren erhaltenen, erfindungsgemässen Zusammensetzung umfassen eine gegenüber PAMXD6 verbesserte Kohlendioxidbarriere, eine gleichmässigere Viskosität, verbesserte Fliesseigenschaften und eine höhere Transparenz des Copolyamids.

In allen Versuchen wurden verfahrensbedingte Zusätze, wie ca. 25 Gew.% Wasser für eine klare und homogene Salzlösung, Antischaummittel zur Unterdrückung der Schaumbildung, Katalysator zur Beschleunigung der Polykondensation und Diaminüberschuss zum Ausgleich von Diaminverlusten, zugesetzt.

### Experiment 1:

In einer ersten Versuchsreihe (Zusammensetzung 1, mit Essigsäure) wurde die in einem Löser hergestellte homogene Mischung aus Isophthalsäure (7.934 kg), Essigsäure (0.298 kg), Adipinsäure (51.203 kg) und m-Xylylendiamin (54.846 kg) in einen Autoklaven überführt, wo die Mischung bis auf 280°C aufgeheizt wurde. Während dem Aufheizen erhöhte sich der Druck durch verdampfendes Wasser. Durch entsprechendes Regulieren mit einem Auslassventil wurde sichergestellt, dass der durch verdampfendes Wasser erzeugte Druck einen Wert von 20 bar nicht überschritt bzw. bei 20 bar gehalten werden konnte. Unmittelbar nach dem Erreichen der Maximaltemperatur von 280°C wurde der Wasserdampf abgelassen und die Mischung bei atmosphärischem Druck entspannt. Dabei setzte die Polykondensation ein und das Drehmoment am Rührer des Autoklaven stieg entsprechend dem erreichten Grad der Polykondensation stark an. Darauf wurde das Polykondensat in an sich bekannter Weise granuliert und getrocknet.

Beim Trocknen verklebte das Granulat. Ausserdem wies dieses viele Einschlüsse auf, wobei die Anzahl der Einschlüsse mit steigender Chargenzahl stark zunahm. Die ausgeprägte gelbe Farbe des Granulats wurde mit einer zu hohen Temperaturbelastung des Polykondensats interpretiert. Obwohl ein gegenüber dem Stand der Technik (vgl. EP 0 288 972) wesentlich geringerer Anteil an aromatischen Dicarbonsäuren eingesetzt wurde, konnte das aus der ersten Zusammensetzung erhaltene Granulat nicht für das Herstellen einer Barriereschicht in PET Flaschen verwendet werden, weil es immer noch zu schlechte Fliesseigenschaften aufwies und die Schmelzfont beim Spritzgiessen der Formlinge zu der gefürchteten "Fingerbildung" neigte. Das Verkleben des Granulats beim Trocknen bedeutete zudem einen wesentlichen Nachteil im Handling des Materials, so dass auch hier ein Verbesserungsbedarf bestand.

### Experiment 2:

In einer zweiten Versuchsreihe wurde die Polykondensation der Zusammensetzung 1 bei einem Druck von 3 bar und einer Temperatur von 270°C durchgeführt. Es stellte sich heraus, dass ein wesentlich niedrigerer Druck (in Weiterführung der Lehre aus US 2,997,463) verbesserte Resultate ergibt. Der Druck wurde - unmittelbar nachdem die Mischung die Maximaltemperatur erreicht hatte - auf atmosphärische Bedingungen reduziert und die Polykondensation bei 300 mbar weitergeführt. Der Unterdruck verkürzt die Polykondensationszeit und hilft somit die Produktqualität zu verbessern und das Verfahren zu beschleunigen.

Für die Polykondensation wird auf Grund dieser zweiten Versuchsreihe ein Druck von maximal 10 bar und eine Temperatur von maximal 255°C bis 270°C bevorzugt. Für das Aufheizen vor der Polykondensation wird ein Druck von 1 bis 6 bar bevorzugt; speziell bevorzugt wird ein Druck von 1 bis 3 bar. Wichtig ist zudem, dass der Druck - unmittelbar nachdem die Mischung die Maximaltemperatur erreicht hat - auf atmosphärische Bedingungen reduziert und die Polykondensation bei einem Druck von weniger als 800 mbar, bevorzugt weniger als 500 mbar, speziell bevorzugt weniger als 300 mbar, besonders bevorzugt weniger als 100 mbar, weitergeführt wird. Ein speziell bevorzugter Temperaturbereich beim Aufheizen unter Druck beträgt 260°C bis 270°C; speziell bevorzugt wird eine Temperatur von 270°C (+/- der Regelgenauigkeit der verwendeten Anlage). Für das Ablassen des Druckes bzw. in der Vakuumphase wird ein Temperaturbereich von 260°C bis 270°C speziell bevorzugt, wobei eine Temperatur von 265°C (+/- der Regelgenauigkeit der verwendeten Anlage) besonders bevorzugt wird.

Eine weitere erfindungsgemässe Verbesserung betrifft die Verwendung einer Monocarbonsäure mit einem pKa-Wert grösser als 4.76 als Additiv zum Regeln der Kettenlänge der Polymere, d.h. als Kettenregler. Überraschenderweise hat es sich herausgestellt, dass die üblicherweise eingesetzte Essigsäure mit einem pKa-Wert von 4.76 nicht geeignet ist, weil das Sieb zum Zurückhalten von Gelteilchen und zum Verhindern des Eintretens dieser Gelteilchen in die Düsenplatte eines an sich bekannten Giesskopfes immer wieder verstopft wurde. Es hat sich gezeigt, dass die Verwendung von Benzoesäure (pKa-Wert = 4.21) ebenfalls schlechte Ergebnisse brachte. Im Experiment stellte sich Propionsäure (pKa-Wert = 4.88) überraschenderweise als geeignet heraus, sie wirkt als Kettenregler und reduziert gleichzeitig die Anzahl von Gelteilchen und Einschlüssen, so dass das Sieb nicht mehr verstopfte. Es wurde somit erkannt, dass der pKa-Wert der als Kettenregler verwendeten Monocarbonsäure vorzugsweise über dem pKa-Wert von 4.76 liegen sollte. Wenn die Propionsäure als Kettenregler geeignet ist, dann können auch andere Monocarbonsäuren mit mindestens 4 Kohlenstoffatomen, wie Pentansäure und dergleichen verwendet werden. Allerdings nimmt mit zunehmender Kettenlänge die Wasserlöslichkeit ab, so dass als obere Grenze für die Verwendung als Kettenregler C₁₈-Monocarbonsäuren (z.B. Stearinsäure) angenommen werden.

Zum weiteren Verbessern der Resultate, insbesondere zum Erzeugen einer geringeren Gelbfärbung können Hitzestabilisatoren phosphitischer und/oder phenolischer Art, wie z.B. Hostanox PAR24 (Tris(2,4-di-tert.Butylphenyl)phosphorigesäureester, 0.025 kg) und/oder Irganox 1010 (Tetrakis[(3,5-di-tert.Butyl-4-hydroxy)hydrozimtsäuremethylester]methan, 0.025 kg) zur Mischung gegeben werden. Diese Hitzestabilisatoren haben den Vorteil, dass deren Verwendung in Verpackungsmaterialien, die mit Lebensmittel in Berührung kommen, von der US Food and Drug Administration (FDA) zugelassen sind. Dasselbe gilt auch für Irganox 1330. Die erzielte Verbesserung betrifft hauptsächlich eine geringere Gelbfärbung und eine reduzierte Gelbildung.

Aus dieser zweiten Versuchsserie resultierte ein Granulat, welches - auch nach 10 aufeinander folgenden Chargen - nur noch wenige Einschlüsse aufwies und keine gelbe Färbung mehr zeigte. Die relative Viskosität des Materials (gemessen in 0.5% m-Kresol) beträgt 1.57. Dieser Wert liegt so tief, dass sich dieses Material nicht für das Herstellen von Sperrschichten in PET-Flaschen eignet. Zudem verklebt das Granulat noch immer beim Trocknen, so dass das Herstellungsverfahren mit Hinblick auf ein einfacheres Handling weiter verbessert werden musste.

### Experiment 3:

In einer dritten Versuchsserie wurde das Granulat (Zusammensetzung 1, aber mit Propionsäure, 0.281 kg) für zwei Stunden einer Unterwasserkristallisation bei 75°C unterworfen. Auf Grund der erzielten Resultate werden Temperaturbereiche von 55°C bis 80°C bevorzugt und Temperaturbereiche von 70°C bis 80°C speziell bevorzugt. Als eine günstige Verweildauer des Granulats erwies sich eine Zeit von 2 bis 12 Stunden als günstig. Zum exakten Festlegen dieser Verweildauer des Granulats im Wasser wird die Unterwasserkristallisation vorzugsweise so lange durchgeführt, bis das ursprünglich durchsichtige Granulat opak erscheint. Je nach gewählter Temperatur kann - auf Grund dieses Merkmals - die Dauer der Unterwasserkristallisation auch an die durch das restliche Verfahren bedingte Chargendauer angepasst werden. Das einer solchen Unterwasserkristallisation unterzogene Granulat verklebt nun beim Trocknen nicht mehr und kann rieselfähig abgepackt oder weiterverarbeitet werden.

Zur Erhöhung der relativen Viskosität wurde das Material einer Festphasennachkondensation unterzogen. Dabei wurde das Granulat zuerst in einem Inertgasstrom, unter starker Bewegung und mit ansteigender Gastemperatur auf die Nachkondensationstemperatur gebracht. Dieses Einleiten des Gases mit ansteigender Temperatur ist notwendig, weil es andernfalls - beim direkten Einspeisen des auf die Nachkondensationstemperatur aufgeheizten Gases - bei Produkttemperaturen zwischen 100°C und 130°C bzw. zwischen 150°C und 170°C (trotz starker Bewegung) zum Verkleben des Granulats und damit zum Blockieren des Prozesses kommt.

Im Experiment wurde das Granulat während 20 Minuten auf 165°C gehalten und die Festphasennachkondensation bei 180°C während 6 Stunden durchgeführt.

Für die Festphasennachkondensation wird auf Grund dieser Versuchsreihe eine Temperatur von 160°C bis 200°C bevorzugt. Ein Temperaturbereich von 170°C bis 190°C wird speziell und ein Temperaturbereich von 175°C bis 185°C besonders bevorzugt. Als Inertgas wird Stickstoffgas bevorzugt, wobei als Taupunktbereich des Stickstoffgases ein Temperaturbereich zwischen +10°C und -60°C bevorzugt und ein Temperaturbereich zwischen -20°C und -60°C speziell bevorzugt wird. Unter Beachtung des schrittweisen Aufheizens des Granulats ist auch eine Festphasennachkondensation im Vakuum, d.h. bei einem Druck von weniger als 800 mbar möglich. Dabei wird ein Druck von weniger als 50 mbar bevorzugt. Speziell bevorzugt wird ein Druck von weniger als 10 mbar und besonders bevorzugt ein Druck von weniger als 2 mbar.

Über die Zeitdauer der Festphasennachkondensation kann die relative Viskosität des Polymers beeinflusst werden, wobei eine relative Viskosität des Materials (gemessen in 0.5% m-Kresol) von 1.65 bis 1.75 bevorzugt und eine relative Viskosität von 1.7 speziell bevorzugt wird.

Dieses Granulat eignet sich zur Verwendung bei der Herstellung von Verpackungen oder Verpackungsmaterialien, insbesondere für Lebensmittel, Chemikalien, Farbstoffe, Kosmetika und dergleichen. Selbst die Herstellung einer diffusionshemmenden Schicht für Sauerstoff und/oder Kohlendioxid in Verpackungen, insbesondere in aus Polyethylenterephthalat (PET) hergestellten Flaschen für Süssgetränke ist möglich, eine "Fingerbildung" findet nicht statt. Das Granulat dieses Copolyamids kann somit als Barrierematerial im Bereich von extrusionsblasgeformten bzw. spritzstreckgeblasenen Behältern und Flaschen, Flach- und Blasfolien bzw. Tuben für Füllgüter verwendet werden. Auch die Herstellung von glasfaserverstärkten Bauteilen, insbesondere in der Fahrzeug-, Optik-, Haushaltgeräte-, Elektro- und Elektronikindustrie, ist unter Verwendung dieses Granulats ohne weiteres möglich.

Will man eine diffusionshemmende Schicht für Sauerstoff in aus Polyethylenterephthalat (PET) hergestellten Bierflaschen, d.h. in Behältern für Füllgüter, die speziell hohe Anforderungen an die Sauerstoffbarriere stellen, so ist die mit diesem Granulat gemäss Experiment 3 hergestellte Diffusionsbarriere noch ungenügend. Für solche Diffusionsbarrieren haben sich sogenannte "Sauerstoff-Scavenger" oder Sauerstoff-Fänger-Substanzen in Form einer organischen Metallverbindung (z.B. Carbonsäuresalze von Eisen, Cobalt, Nickel) bewährt, wie diese z.B. aus EP 0 301 719 bekannt sind. Allerdings wird die Schmelzeviskosität des Copolyamids durch die Beigabe des Sauerstoff-Scavengers zum Granulat erniedrigt, so dass es sich für die Herstellung einer diffusionshemmenden Schicht für Sauerstoff in Verpackungen, insbesondere in aus Polyethylenterephthalat (PET) hergestellten Flaschen nicht mehr eignet. Durch eine zusätzliche Festphasennachkondensation (Halten des Granulats während 20 Minuten auf 165°C; Festphasennachkondensation bei 180°C während 6 Stunden) kann jedoch die relative Viskosität erhöht werden, wobei vorzugsweise erst nach der Festphasennachkondensation dem Granulat ein Sauerstoff-Scavenger in Form einer organischen Metallverbindung zugemischt wird.

### Experiment 4:

In einer vierten Versuchsserie wurde der Zusammensetzung 1 während dem Erstellen der Mischung ein Nukleierungs-Additiv in Form einer pyrogenen Kieselsäure (Aerosil COK 0.050 kg) zugegeben. Das Verfahren wurde mit Propionsäure als Regler und mit Zusatz von Hitzestabilisatoren (wie in Experiment 2) sowie mit einer Unterwasserkristallisation und einer Festphasennachkondensation (wie in Experiment 3) durchgeführt. Dadurch wurde die Klarheit bzw. die Durchsichtigkeit des Copolymers zusätzlich verbessert.

### Experiment 5:

In einer fünften Versuchsserie wurde die Zusammensetzung durch unterschiedliche Zugabe von aromatischen Dicarbonsäuren während dem Erstellen der Mischung variiert.

Ein Vergleich der erfindungsgemässen Rezeptur (alle Angaben in Mol% bezogen auf die Zugabe an Dicarbonsäuren) mit dem Stand der Technik ist in Tabelle 1 ersichtlich. Die Zusammensetzung 1 (mit Propionsäure als Kettenregler) wurde im Experiment 3 bzw. in Experiment 4 hergestellt, die Zusammensetzungen 2 bis 5 wurden durch die Variation der Anteile an aromatischen Dicarbonsäuren in Experiment 5 erhalten.

Die Messung des Schmelzpunktes (in °C) bzw. der Glasübergangstemperatur (in °C) wurde standardgemäss ausgeführt. Für die Messung der CO₂-Permeation wurde eine nicht gestreckte und nicht orientierte Flachfolie mit einer durchschnittlichen Dicke von 50 µm hergestellt. An dieser Folie wurde die CO₂-Permeation bei einer relativen Luftfeuchtigkeit von 85% und einer Temperatur von 23 °C (in cm³/m² · Tage · bar) gemessen. Als gesicherte Werte für die CO₂-Permeation gelten zumindest die Werte für die erfindungsgemässe Zusammensetzung 1 und die Kontrolle.

**Tabelle 1:**

| | Stand der Technik EP 0 288 972 | **Erfindungsgemässe Zusammensetzung** | | | | Kontrolle |
|---|---|---|---|---|---|---|
| | | **1** | **2** | **3** | **4** | |
| **MXDA** | 100 | 100 | 100 | 100 | 100 | 100 |
| **IPS** | 20-30 | 12 | - | 2.5 | - | - |
| **TPS** | 5-20 | - | 5 | 2.5 | 12 | - |
| **AS** | 55-70 | 88 | 95 | 95 | 88 | 100 |
| Schmelzpunkt (°C) | | 215 | 232 | 230 | 225 | 234 |
| Glasübergangstemperatur (°C) | | 96 | 94 | 92 | 95 | 86 |
| CO₂-Permeation (cm³/m² d bar) | | 17 | - | 9 | 23 | 29 |
| BADBA-Konzentration (Gew.%) | | 0.45 | 0.30 | 0.25 | 0.49 | 0.18 |

Aus der Tabelle 1 ist ersichtlich, dass zumindest mit den erfindungsgemässen Zusammensetzungen 1, 3 und 4 die Barrierefunktion zur Reduzierung der CO₂₋Permeation verbessert werden konnte. Der Wert für die Zusammensetzung 2 wurde wegen schlechter Folienqualität nicht gemessen. Aus dieser Zusammenstellung sind zudem die bevorzugten Anteile der aromatischen Dicarbonsäuren (alle Angaben in Mol% bezogen auf die Zugabe an Dicarbonsäuren) ersichtlich, dabei steht die Abkürzung MXDA für m-Xylylendiamin, IPS für Isophthalsäure, TPS für Terephthalsäure und AS für Adipinsäure.

Die Diaminkomponente besteht vollständig oder zum wesentlichen Teil aus m-Xylylendiamin. Um bestimmte Eigenschaften, wie zum Beispiel Kristallisationsgeschwindigkeit, Schmelzpunkt, Glasübergangstemperatur, Flexibilität, Transparenz, Durchstossfestigkeit, Zähigkeit, Verbundhaftung und Gasbarriere gezielt zu steuern, können auch andere Diamine wie Hexamethylendiamin, Diaminobutan, Methylpentamethylendiamin, 3,3'-Dimethyl-4,4'-diaminodicyclohexylmethan, 1,6-Diamino-2,2,4-trimethylhexan, 1,6-Diamino-2,4,4-trimethylhexan, p-Xylylendiamin, Decandiamin, Dodecandiamin, 2,2-Bis(p-aminocyclohexyl)propane, Bis(p-aminocyclohexyl)methan, Isophorondiamin, Polypropylenglykoldiamin, Norbornandiamin, 1,3-Bis(aminomethyl)cyclohexan oder TCD-Diamin in geringen Mengen (d.h. bis zu etwa 10%) mitverwendet werden.

Ebenso ist der Einsatz von geringen Mengen (bis zu etwa 10%) anderer aliphatischer Dicarbonsäuren, Aminosäuren und Lactamen wie Bernsteinsäure, Glutarsäure, Azelainsäure, Sebazinsäure, Dodecandisäure, Dimersäure, Aminocapronsäure, Aminoundecansäure, Aminododecansäure, Caprolactam oder Laurinlactam möglich. Als aromatische Dicarbonsäuren können zum Beispiel Isophthalsäure, Terephthalsäure, Naphthalindicarbonsäure, tert-Butyl-Isophthalsäure oder Phenylindandicarbonsäure eingesetzt werden. Bevorzugt sind Isophthalsäure, Terephthalsäure oder Mischungen davon. Besonders bevorzugt ist Isophthalsäure.

Beim Durchführen aller Experimente wurde (in Weiterführung der Lehre aus US 2,997,463) die Bildung von 3,3'-bis(Aminomethyl)-dibenzylamin (BADBA) beobachtet. Dieses Nebenprodukt geht unerwünschte Vernetzungsreaktionen mit dem Copolyamid ein, so dass - zum Verhindern von Gelbildung und zum Verbessern des Fliessverhaltens - eine möglichst niedrige Bildung von BADBA wünschbar ist. Es wurde zudem beobachtet, dass insbesondere die Zugabe von aromatischen Dicarbonsäuren die Bildung von BADBA unterstützt. Durch das erfindungsgemässe Verfahren kann die Konzentration an BADBA minimal gehalten werden. Der Gehalt an BADBA wurde bestimmt, indem das Polyamid mit 6n HCI während 24 Stunden bei 150°C hydrolysiert, abgedampft, getrocknet, mit Trifluoressigsäureanhydrid in Dichlormethan trifluoracetyliert und in einer HPLC-Anlage von Waters mit einem UV-Detektor (254 nm), einer Säule Symmetry C8 von Waters und einem Gradientengemisch von Acetonitril/Wasser quantitativ bestimmt wurde. Die sich je nach der gewählten Zusammensetzung ergebenden BADBA-Konzentrationen sind aus der Tabelle 1 ersichtlich.

Das erfindungsgemässe, alternative Verfahren umfasst die Anwendung von Temperaturen und Drücken, die wesentlich unter denjenigen liegen, die in EP 0 409 666 offenbart sind und zu einer erwünschten Erniedrigung der BADBA-Konzentration beitragen.

## Patentansprüche

1. Verfahren zum Herstellen einer Polyamidformmasse, das folgende Verfahrensschritte umfasst:
a) Zugabe und Lösen von m-Xylylendiamin und Dicarbonsäuren, welche Adipinsäure und aromatische Dicarbonsäuren umfassen, mit Wasser und Additiven in einem Löser und Herstellen einer Mischung, wobei die Summe der zugegebenen aromatischen Dicarbonsäuren 2 Mol% bis 15 Mol% (bezogen auf die Zugabe an Dicarbonsäuren) beträgt;
b) Überführen der Mischung in ein Reaktionsgefäss und Polykondensieren der Mischung in diesem Reaktionsgefäss;
c) Granulieren des Polykondensats;
d) Trocknen des Granulats;,
**dadurch gekennzeichnet, dass;**
• die Polykondensation bei einem Druck von maximal 10 bar und einer Temperatur von 255°C bis 270°C ausgeführt wird, wobei der Druck unter Aufheizen des Reaktionsgefässes auf 255°C bis 270°C aufgebaut und - unmittelbar nachdem die Mischung die Maximaltemperatur erreicht hat - unter Einhalten einer Temperatur von 255°C bis 270°C auf atmosphärische Bedingungen reduziert und die Polykondensation bei dieser Temperatur und einem Druck von weniger als 800 mbar weitergeführt wird;
• das Granulat vor dem Trocknen einer Unterwasserkristallisation unterzogen wird.

2. Verfahren nach Anspruch 1, **dadurch gekennzeichnet, dass** die aromatischen Dicarbonsäuren in Form von 5 bis 15 Mol% Isophthalsäure und/oder Terephthalsäure (bezogen auf die Zugabe an Dicarbonsäuren) zugegeben werden.

3. Verfahren nach Anspruch 1, **dadurch gekennzeichnet, dass** die aromatischen Dicarbonsäuren in Form von 10 bis 15 Mol% Isophthalsäure (bezogen auf die Zugabe an Dicarbonsäuren) zugegeben werden.

4. Verfahren nach Anspruch 1 oder 3, **dadurch gekennzeichnet, dass** die aromatischen Dicarbonsäuren in Form von 12 Mol% Isophthalsäure und (bezogen auf die Zugabe an Dicarbonsäuren) zugegeben werden.

5. Verfahren nach einem der Ansprüche 1 bis 4, **dadurch gekennzeichnet, dass** die Polykondensation bei einem Druck von 1 bis 6 bar und einer Temperatur von maximal 255°C bis 270°C ausgeführt wird, wobei der Druck unter Aufheizen des Reaktionsgefässes auf 260°C bis 270°C aufgebaut und - unmittelbar nachdem die Mischung die Maximaltemperatur erreicht hat - unter Einhalten einer Temperatur von 260°C bis 270°C auf atmosphärische Bedingungen reduziert und die Polykondensation bei dieser Temperatur und einem Druck von weniger als 500 mbar weitergeführt wird.

6. Verfahren nach einem der Ansprüche 1 bis 4, **dadurch gekennzeichnet, dass** die Polykondensation bei einem Druck von maximal 1 bis 3 bar und einer Temperatur von maximal 255°C bis 270°C ausgeführt wird, wobei der Druck unter Aufheizen des Reaktionsgefässes auf 270°C (+/- der Regelgenauigkeit der verwendeten Anlage) aufgebaut und - unmittelbar nachdem die Mischung die Maximaltemperatur erreicht hat - unter Einhalten einer Temperatur von 265°C (+/- der Regelgenauigkeit der verwendeten Anlage) auf atmosphärische Bedingungen reduziert und die Polykondensation bei dieser Temperatur und einem Druck von weniger als 300 mbar weitergeführt wird

7. Verfahren nach einem der Ansprüche 1 bis 6, **dadurch gekennzeichnet, dass** die Unterwasserkristallisation bei einer Temperatur von 55°C bis 80°C durchgeführt wird.

8. Verfahren nach einem der Ansprüche 1 bis 7, **dadurch gekennzeichnet, dass** die Unterwasserkristallisation bei einer Temperatur von 70°C bis 80°C durchgeführt wird.

9. Verfahren nach einem der Ansprüche 7 oder 8, **dadurch gekennzeichnet, dass** die Unterwasserkristallisation während mindestens 2 Stunden durchgeführt wird bzw. bis das Granulat opak erscheint.

10. Verfahren nach einem der vorhergehenden Ansprüche, **dadurch gekennzeichnet, dass** der Mischung in Schritt a) ein Regler in Form einer Monocarbonsäure mit einem pKa-Wert von grösser als 4.76 zum Abbrechen der Polymerketten, d.h. zum Regeln der Kettenlänge beigefügt wird.

11. Verfahren nach Anspruch 10, **dadurch gekennzeichnet, dass** als Regler Propionsäure verwendet wird.

12. Verfahren nach einem der vorhergehenden Ansprüche, **dadurch gekennzeichnet, dass** der Mischung in Schritt a) Hitzestabilisatoren phosphitischer und/oder phenolischer Art zugegeben werden.

13. Verfahren nach Anspruch 12, **dadurch gekennzeichnet, dass** als Hitzestabilisatoren Tetrakis[(3,5-di-tert.Butyl-4-hydroxy)hydrozimtsäuremethylester]methan und/oder Tris(2,4-di-tert.Butylphenyl)phosphorigesäureester verwendet werden.

14. Verfahren nach einem der vorhergehenden Ansprüche, **dadurch gekennzeichnet, dass** der Mischung in Schritt a) ein Nukleierungs-Additiv in Form einer pyrogenen Kieselsäure zugegeben wird.

15. Verfahren nach einem der vorhergehenden Ansprüche, **dadurch gekennzeichnet, dass** als Polykondensationskatalysator und Hitzestabilisator Natriumhypophosphit verwendet wird.

16. Verfahren nach einem der vorhergehenden Ansprüche, **dadurch gekennzeichnet, dass** das Granulat einer Festphasennachkondensation in einem Inertgasstrom oder in einem Vakuum unterworfen wird, wobei das Granulat unter Bewegung über ein Temperaturprofil auf zumindest annähernd die Nachkondensationstemperatur vorgewärmt und anschliessend bei 160°C bis 200°C nachkondensiert wird.

17. Verfahren nach Anspruch 16, **dadurch gekennzeichnet, dass** als Inertgas Stickstoff verwendet wird.

18. Verfahren nach Anspruch 16, **dadurch gekennzeichnet, dass** die Festphasennachkondensation im Vakuum bei einem Druck von weniger als 800 mbar ausgeführt wird.

19. Verfahren nach einem der Ansprüche 1 bis 18, **dadurch gekennzeichnet, dass** dem Granulat, insbesondere nach einer erfolgten Festphasennachkondensation, ein Sauerstoff-Scavenger in Form einer organischen Metallverbindung (z.B. Carbonsäuresalze von Eisen, Cobalt, Nickel) zugemischt wird.

20. Granulat, hergestellt durch ein Verfahren gemäss einem der Ansprüche 1 bis 19.

21. Verwendung eines gemäss einem der Ansprüche 1 bis 19 hergestellten Granulats zur Herstellung von Verpackungen oder Verpackungsmaterialien, insbesondere für Lebensmittel, Chemikalien, Farbstoffe, Kosmetika und dergleichen.

22. Verwendung eines Granulats gemäss Anspruch 20 zur Herstellung von Verpackungen oder Verpackungsmaterialien, insbesondere für Lebensmittel, Chemikalien, Farbstoffe, Kosmetika und dergleichen.

23. Verwendung gemäss einem der Ansprüche 21 oder 22, **dadurch gekennzeichnet, dass** das Granulat zur Herstellung einer diffusionshemmenden Schicht für Sauerstoff und/oder Kohlendioxid in Verpackungen, insbesondere in aus Polyethylenterephthalat (PET) hergestellten Flaschen, verwendet wird.

24. Verwendung gemäss einem der Ansprüche 21 oder 22, **dadurch gekennzeichnet, dass** das Granulat zur Herstellung einer diffusionshemmenden Schicht für Sauerstoff und/oder Kohlendioxid in aus Polyethylenterephthalat (PET) hergestellten Bierflaschen verwendet wird.

25. Verwendung gemäss einem der Ansprüche 21 oder 22, **dadurch gekennzeichnet, dass** das Granulat zur Herstellung von Glasfaserverstärkten Bauteilen, insbesondere in der Fahrzeug-, Optik-, Haushaltgeräte-, Elektro- und Elektronikindustrie, verwendet wird.

## Claims

1. Procedure for producing a polyamide moulding compound comprising the following procedural steps:
a) Addition and solution of m-xylylenediamine and dicarboxylic acids, including adipic acid and aromatic dicarboxylic acids, with water and additives in a soluble and production of a mixture such that the amount of the added aromatic dicarboxylic acids totals 2 mol% to 15 mol% (with respect to the dicarboxylic acid contribution);
b) transfer of the mixture into a reactor vessel and polycondensation of the mixture in this reactor vessel;
c) granulation of the polycondensate;
d) drying of the granulate;
**characterized in that**:
• the polycondensation is performed at a maximum pressure of 10 bar and at a temperature of 255°C to 270°C, the pressure being built up during heating of the reactor vessel to a temperature of 255°C to 270°C and, as soon as the mixture has reached maximum temperature, reduced to atmospheric conditions while the temperature is maintained at 255°C to 270°C and the polycondensation is continued at this temperature and at a pressure of less than 800 mbar;
• the granulate is subjected to underwater crystallization before drying.

2. Procedure according to Claim 1, **characterized in that** the aromatic dicarboxylic acids are added in the form of 5 to 15 mol% isophthalic acid and/or terephthalic acid (with respect to the dicarboxylic acid contribution).

3. Procedure according to Claim 1, **characterized in that** the aromatic dicarboxylic acids are added in the form of 10 to 15 mol% isophthalic acid (with respect to the dicarboxylic acid contribution).

4. Procedure according to Claim 1 or 3, **characterized in that** the aromatic dicarboxylic acids are added in the form of 12 mol% isophthalic acid (with respect to the dicarboxylic acid contribution).

5. Procedure according to any one of Claims 1 to 4, **characterized in that** the polycondensation is performed at a pressure of 1 to 6 bar and at a maximum temperature of 255°C to 270°C, the pressure being built up during heating of the reactor vessel to a temperature of 260°C to 270°C and, as soon as the mixture has reached maximum temperature, reduced to atmospheric conditions while the temperature is maintained at 260°C to 270°C and the polycondensation is continued at this temperature and at a pressure of less than 500 mbar.

6. Procedure according to any one of Claims 1 to 4, **characterized in that** the polycondensation is performed at a maximum pressure of 1 to 3 bar and at a maximum temperature of 255°C to 270°C, the pressure being built up during heating of the reactor vessel up to 270°C (+/- the accuracy of regulation of the plant employed) and, as soon as the mixture has reached maximum temperature, reduced to atmospheric conditions while the temperature is maintained at a temperature of 265°C (+/- the accuracy of regulation of the plant employed) and the polycondensation is continued at this temperature and at a pressure of less than 300 mbar.

7. Procedure according to any one of Claims 1 to 6, **characterized in that** the underwater crystallization is performed at a temperature of 55°C to 80°C.

8. Procedure according to any one of Claims 1 to 7, **characterized in that** the underwater crystallization is performed at a temperature of 70°C to 80°C.

9. Procedure according to one of Claims 7 or 8, **characterized in that** the underwater crystallization is performed for at least 2 hours or until the granulate presents an opaque appearance.

10. Procedure according to any one of the above Claims, **characterized in that** the mixture in step a) has added to it a regulator in the form of a monocarboxylic acid having a pKa value greater than 4.76 to break down the polymer chains, i.e. to regulate chain length.

11. Procedure according to Claim 10, **characterized in that** propionic acid is used as regulator.

12. Procedure according to any one of the above Claims, **characterized in that** the mixture in step a) has added to it heat stabilizers of phosphoritic and/or phenolic type.

13. Procedure according to Claim 12, **characterized in that** as heat stabilizers tetrakis[(3,5-di-tert.butyl-4-hydroxy)hydrozimt acid-methylester]methane and/or tris(2,4-di-tert.butylphenyl) phosphoric acid ester are used.

14. Procedure according to any one of the above Claims, **characterized in that** the mixture in step a) has added to it a nucleating additive in the form of a pyrogenic silicic acid.

15. Procedure according to any one of the above Claims, **characterized in that** as a polycondensation catalyst and heat stabilizer sodium hypophosphite is used.

16. Procedure according to any one of the above Claims, **characterized in that** the granulate undergoes a solid-phase post-condensation step in a stream of inert gas or in a vacuum, for which the stirred granulate is preheated to a temperature band at least approximating to post-condensation temperature and immediately post-condensed at 160°C to 200°C.

17. Procedure according to Claim 16, **characterized in that** nitrogen is used as the inert gas.

18. Procedure according to Claim 16, **characterized in that** the solid-phase post-condensation is performed in a vacuum at a pressure of less than 800 mbar.

19. Procedure according to any one of Claims 1 to 18, **characterized in that** the granulate, especially after successful solid-phase post-condensation, has admixed with it an oxygen scavenger in the form of an organic metallic compound (e.g. carbonic acid salts of iron, cobalt or nickel).

20. Granulate produced by a procedure according to any one of Claims 1 to 19.

21. Use of a granulate produced according to any one of Claims 1 to 19 for the manufacture of packaging or packaging material, especially for foodstuffs, chemicals, dyestuffs, cosmetics and similar.

22. Use of a granulate according to Claim 20 for the manufacture of packaging or packaging material, especially for foodstuffs, chemicals, dyestuffs, cosmetics and similar.

23. Use according to one of Claims 21 or 22, **characterized in that** the granulate is used for the manufacture of a diffusion-inhibiting layer for oxygen or and/or carbon dioxide in packaging, especially in bottles made from polyethylene terephthalate (PET).

24. Use according to one of Claims 21 or 22, **characterized in that** the granulate is used for the manufacture of a diffusion-inhibiting layer for oxygen or and/or carbon dioxide in beer bottles made from polyethylene terephthalate (PET).

25. Use according to one of Claims 21 or 22, **characterized in that** the granulate is used for the manufacture of fibreglass-reinforced components, especially in the automobile, optical, domestic appliance, electrical and electronics industries.

## Revendications

1. Procédé de fabrication d'une matière moulable en polyamide, qui comprend les étapes de procédé suivantes :
a) ajout et dissolution de m-xylylènediamine et d'acides dicarboxyliques, qui comprennent de l'acide adipique et des acides dicarboxyliques aromatiques, avec de l'eau et des additifs dans un solvant, et fabrication d'un mélange, où la somme des acides dicarboxyliques aromatiques ajoutés est comprise entre 2 % en mole et 15 % en mole (sur la base de l'ajout des acides dicarboxyliques) ;
b) transfert du mélange dans un réacteur et polycondensation du mélange dans ce réacteur ;
c) granulation du polycondensat ;
d) séchage du granulat ,
**caractérisé en ce que**
• la polycondensation est conduite à une pression au maximum égale à 10 bars et à une température de 255 °C à 270 °C, la pression étant créée sous chauffage du réacteur à 255 °C jusqu'à 270 °C et - directement après que le mélange a atteint la température maximale - réduite à des conditions atmosphériques en observant une température de 255 °C à 270 °C, et la polycondensation étant poursuivie à cette température et à une pression inférieure à 800 mbar ;
• le granulat est soumis avant le séchage à une cristallisation sous l'eau.

2. Procédé selon la revendication 1, **caractérisé en ce que** les acides dicarboxyliques aromatiques sont ajoutés sous la forme de 5 à 15 % en mole d'acide isophtalique et/ou d'acide téréphtalique (sur la base de l'ajout des acides dicarboxyliques).

3. Procédé selon la revendication 1, **caractérisé en ce que** les acides dicarboxyliques aromatiques sont ajoutés sous la forme de 10 à 15 % en mole d'acide isophtalique (sur la base de l'ajout des acides dicarboxyliques).

4. Procédé selon la revendication 1 ou 3, **caractérisé en ce que** les acides dicarboxyliques aromatiques sont ajoutés sous la forme de 12 % en mole d'acide isophtalique (sur la base de l'ajout des acides dicarboxyliques).

5. Procédé selon l'une des revendications 1 à 4, **caractérisé en ce que** la polycondensation est conduite à une pression de 1 à 6 bar et à une température au maximum de 255 °C à 270 °C, la pression étant créée sous chauffage du réacteur à 260 °C jusqu'à 270 °C et - directement après que le mélange a atteint la température maximale - réduite à des conditions atmosphériques en observant une température de 260 °C à 270 °C, et la polycondensation étant poursuivie à cette température et à une pression de moins de 500 mbar.

6. Procédé selon l'une des revendications 1 à 4, **caractérisé en ce que** la polycondensation est conduite à une pression au maximum de 1 à 3 bar et à une température au maximum de 255 °C à 270 °C, la pression étant créée sous chauffage du réacteur à 270 °C (± la précision de régulation de l'appareil utilisé) et - directement après que le mélange a atteint la température maximale - réduite à des conditions atmosphériques en respectant une température de 265 °C (± la précision de régulation de l'appareil utilisé), et la polycondensation étant poursuivie à cette température et à une pression de moins de 300 mbar.

7. Procédé selon l'une des revendications 1 à 6, **caractérisé en ce que** la cristallisation sous l'eau est réalisée à une température de 55 °C à 80 °C.

8. Procédé selon l'une des revendications 1 à 7, **caractérisé en ce que** la cristallisation sous l'eau est réalisée à une température de 70 °C à 80 °C.

9. Procédé selon l'une des revendications 7 ou 8, **caractérisé en ce que** la cristallisation sous l'eau est réalisée pendant au moins 2 heures ou jusqu'à ce que le granulat semble opaque.

10. Procédé selon l'une des revendications précédentes, **caractérisé en ce qu'**au mélange de l'étape a), on ajoute un régulateur sous la forme d'un acide monocarboxylique présentant une valeur de pKa supérieure à 4,76 pour rompre la chaîne polymère, à savoir pour réguler la longueur de chaîne.

11. Procédé selon la revendication 10, **caractérisé en ce que** l'on utilise comme agent régulateur de l'acide propionique.

12. Procédé selon l'une des revendications précédentes, **caractérisé en ce que** l'on ajoute au mélange de l'étape a) des stabilisants à la chaleur de type phosphitiques et/ou phénoliques.

13. Procédé selon la revendication 12, **caractérisé en ce que** l'on utilise comme stabilisants à la chaleur du tétrakis[méthylester d'acide(3,5-di-tert.butyl-4-hydroxy)hydrocinnamique]méthane et/ou de l'ester d'acide tris(2,4-di-tert.butylphényl)phosphorique.

14. Procédé selon l'une des revendications précédentes, **caractérisé en ce que** l'on ajoute au mélange de l'étape a) un additif de nucléation sous la forme d'un acide silicique pyrogène.

15. Procédé selon l'une des revendications précédentes, **caractérisé en ce que** l'on utilise comme catalyseur de polycondensation et stabilisant à la chaleur de l'hypophosphite de sodium.

16. Procédé selon l'une des revendications précédentes, **caractérisé en ce que** le granulat est soumis à une post-condensation en phase solide dans un courant de gaz inerte ou sous vide, le granulat étant préchauffé par déplacement sur un profil de températures à au moins approximativement la température de la post-condensation, puis étant post-condensé à 160 °C jusqu'à 200 °C.

17. Procédé selon la revendication 16, **caractérisé en ce que** l'on utilise de l'azote comme gaz inerte.

18. Procédé selon la revendication 16, **caractérisé en ce que** la post-condensation en phase solide est réalisée sous vide et à une pression inférieure à 800 mbar.

19. Procédé selon l'une des revendications 1 à 18, **caractérisé en ce que** l'on ajoute par mélange au granulat, en particulier après une post-condensation en phase solide, un fixateur d'oxygène sous la forme d'un composé métallique organique (par exemple sels d'acide carboxylique de fer, cobalt, nickel).

20. Granulat fabriqué par un procédé selon l'une des revendications 1 à 19.

21. Utilisation d'un granulat fabriqué selon l'une des revendications 1 à 19 pour fabriquer des emballages ou des matériaux d'emballage, en particulier pour des produits alimentaires, des produits chimiques, des colorants, des produits cosmétiques et équivalents.

22. Utilisation d'un granulat selon la revendication 20 pour fabriquer des emballages ou des matériaux d'emballage, en particulier pour des produits alimentaires, des produits chimiques, des colorants, des produits cosmétiques et équivalents.

23. Utilisation selon l'une des revendications 21 ou 22, **caractérisée en ce que** le granulat est utilisé pour fabriquer une couche bloquant la diffusion pour l'oxygène et/ou le dioxyde de carbone dans des emballages, en particulier dans des bouteilles fabriquées en téréphtalate de polyéthylène (PET).

24. Utilisation selon l'une des revendications 21 ou 22, **caractérisée en ce que** le granulat est utilisé pour fabriquer une couche bloquant la diffusion pour l'oxygène et/ou le dioxyde de carbone dans des bouteilles de bière fabriquées en téréphtalate de polyéthylène (PET).

25. Utilisation selon l'une des revendications 21 ou 22, **caractérisée en ce que** le granulat est utilisé pour fabriquer des pièces renforcées à la fibre de verre, en particulier dans l'industrie de l'automobile, de l'optique, des appareils ménagers, de l'électricité et de l'électronique.
